# EUROPEAN PATENT SPECIFICATION

(11) **EP 2 000 635 B1**
(45) Date of publication and mention of the grant of the patent: **15.12.2010**
(21) Application number: 07380153.2
(22) Date of filing: 29.05.2007
(51) Int. Cl.: F01K 17/06, F23G 5/04, F26B 5/04, F26B 23/00

(54) **Steam power plant with fuel drying arrangement**
Dampfkraftwerk mit Brennstofftrocknung
Centrale à vapeur avec séchage du combustible

(43) Date of publication of application: 10.12.2008
(73) Proprietor: Lealesa Quality SL, 08021 Barcelona (Barcelona) (ES); Sociedad Cientifica de Peritos L-Tron, Moscú (RU)
(72) Inventor: Kovalev, Lev Kuzmich, 08021 Barcelona (ES); Kovaleva, Natalia Lvovna, 08021 Barcelona (ES); Pokhodnya, Igor Leonidovich, 08021 Barcelona (ES); Kozub, Ignatiy Vasilievich, 08021 Barcelona (ES); Torres Soriano, Francisco, 08021 Barcelona (ES)
(74) Representative: Gislon, Gabriele

(56) References cited:
- DE-A1- 3 835 427
- DE-A1- 10 050 520
- DE-A1- 19 518 644
- GB-A- 343 981

## Description

### Field of the Art

This invention relates to the field of thermal energy, particularly to systems for converting thermal energy into electrical energy and which can be used while burning different waste organic matter.

### Prior State of the Art

Patent document US-A-5216884 describes a system for converting thermal energy into electrical energy, constructed by a traditional conversion scheme based on burning fuel by a steam boiler, with a system for delivering the burning products to said boiler and a system for delivering the high-pressure steam generated by the boiler to a turbine joined to an electrical energy generator.

The drawbacks of said system are the relatively low efficiency of the operation of the system and the relatively high thermal energy losses.

A further prior art system is described in patent document US-A-4896508, and comprises a fuel tank, a fuel combustion chamber, a steam boiler joined to said combustion chamber by means of a tube, and an electrical turbogenerator with a turbine communicated with the steam outlet of the boiler and with an exhaust steam outlet joined to a heat exchanger connected to said boiler in order to supply said exhaust steam once it is condensed to the boiler.

The drawbacks of said system are the thermal energy losses which, after all, reduce its efficiency with the corresponding environmental damage.

Furthermore, DE3835427 and GB 343981 describe systems for converting thermal energy into electrical energy including drying of organic matter prior to combustion.

### Description of the Invention

The problem, which the proposed invention is intended to solve, consists of increasing the efficiency of a system for converting thermal energy into electrical energy, increasing its productivity and decreasing environmental pollution.

The system for converting thermal energy into electrical energy fulfills the considered objective.

The system proposed by the present invention comprises a tank for containing wet combustible matter, a steam boiler, a heat exchanger and an electrical turbogenerator supplied by a high-pressure steam generated by the boiler upon burning dry combustible matter dried (in a predetermined degree) by a combustible drying chamber which is joined by means of a tube with the secondary or exhaust steam outlet of said electrical turbogenerator to use said exhaust steam as a heat source for heating said wet combustible matter for the purpose of drying it.

On the other hand, the steam resulting from the drying chamber and from the electrical turbogenerator is introduced in said heat exchanger, from which a condensate is obtained which is led to said boiler. The dry combustible matter coming from the drying chamber is burnt in such boiler and high-pressure steam is obtained which is introduced in said steam turbogenerator for the purpose of obtaining electrical energy from the thermal energy provided by said high-pressure steam.

### Brief Description of the Drawings

The previous and other advantages and features will be more fully understood from the following detailed description of several embodiments with reference to the attached drawings, which must be taken by way of a non-limiting illustration, in which:

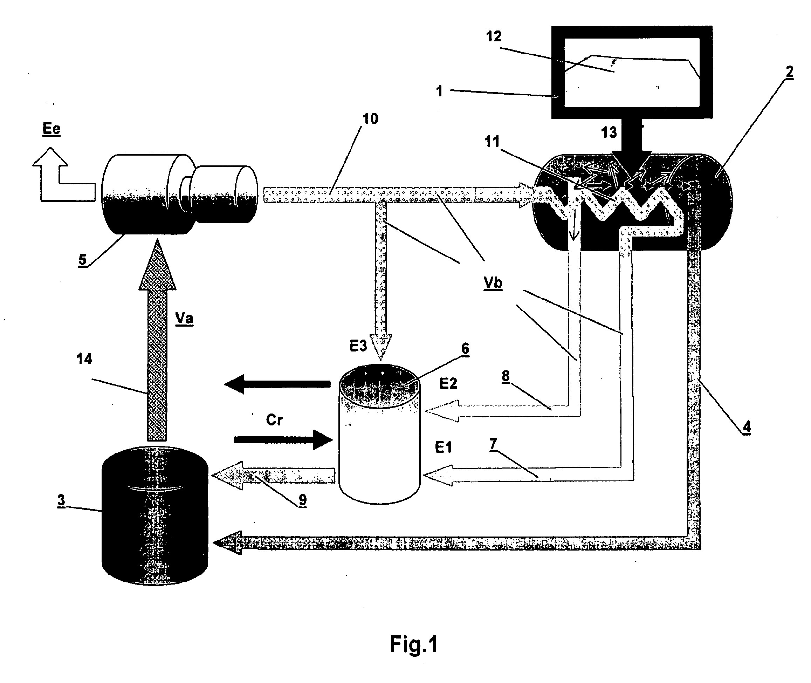

Figure 1 shows a schematic diagram of the system for converting thermal energy into electrical energy proposed by the invention for an embodiment.

### Detailed Description of an Embodiment

As can be observed in Figure 1, the system for converting thermal energy into electrical energy proposed by the present invention comprises:
- a steam boiler 3,
- a tank 1 of combustible matter to be supplied to said boiler 3,
- an electrical turbogenerator 5 with a turbine communicated with a steam outlet 14 of said boiler 3; and
- a heat exchanger 6 with a first inlet E1 receiving exhaust steam from said electrical turbogenerator 5 (after circulating through a heat exchanger 11 which will be described below) and an outlet 9 connected to said steam boiler 3 to supply said exhaust steam once it is condensed to the boiler 3.

The proposed system comprises a dehydrating and drying system (such as that proposed in the contemporaneous patent application entitled "Method and system for dehydrating and drying under vacuum", filed on the same day as the application relating to the present invention), with at least one vacuum chamber 2, or drying chamber 2, with:
- a heat exchanger or heat exchangers 11 for heating said wet combustible matter 12 for the purpose of drying it up to a predetermined degree,
- an inlet 13 joined to said tank 1 for introducing said wet combustible matter 12 in said vacuum chamber 2 on said at least one heat exchanger 11,
- a first outlet 4 connected by means of a tube to an inlet of the steam boiler 3 to supply it with said combustible matter once it is dry, and
- a second outlet 8 connected by means of a tube to a second inlet E2 of said heat exchanger 6 to supply it with the water steam leaving the vacuum chamber 2, resulting from the evaporation of the moisture of the wet combustible matter 12 upon drying, so that such heat exchanger 6 condenses it and supplies it to the steam boiler 3 through said outlet 9 of the heat exchanger 6.

Said heat exchanger 11 of the vacuum chamber 2 comprises an inlet connected to said exhaust steam outlet 10 of the electrical turbogenerator 5, and an outlet 7 connected by a tube to said first inlet E1 of said heat exchanger 6 to supply it with said exhaust steam from the electrical turbogenerator 5 once it has circulated through the heat exchanger 11 of the vacuum chamber 2, generally by inner tubular channels of the heat exchanger 11.

The exhaust steam from the turbogenerator 5 is thus used to obtain dry combustible matter for the boiler 3, as well as a supply of condensed steam to the boiler 3, after passing through the heat exchangers 11 and 6.

For the purpose of using the exhaust steam from the turbogenerator 5 even further, if there is a sufficient amount, the heat exchanger 6 comprises a third inlet E3 directly connected to said exhaust steam outlet 10 of the electrical turbogenerator 5, the heat exchanger 6 being adapted to supply the liquid product of the condensation of the steam entering through the three inlets E1, E2, E3, generally water, to the steam boiler 3 through said outlet 9.

Figure 1 shows how said outlet 10 adopts the form of a line or tube 10 branching towards the heat exchanger 11 and towards the third inlet E3 of the heat exchanger 6.

The steam entering through the inlets E1, E2, E3 of the heat exchanger 6 is low-pressure steam Vb and the steam leaving through said steam outlet 14 of said boiler 3 is high-pressure steam Va at a temperature of hundreds of degrees centigrade which, for one embodiment, is about 400 °C, which steam, upon being directed towards the turbine of the electrical turbogenerator 5 and making it rotate, causes thermal energy to be converted into electrical energy Ee.

The heat exchanger 6 comprises a cooling circuit Cr with an inlet of a cooling substance, such as cold water for example, to cool the entering steam until condensing it by means of heat transfer.

For one embodiment said predetermined drying degree corresponds to a final moisture in the combustible matter of 10 to 12%.

As regards the wet combustible matter 12, such matter generally consists of organic waste with high moisture and of different origin. For example, it can be waste from oleaceae pressing processes, from the wood industry, from pig and poultry farms, from factories producing sugar and from other similar productions.

In the initial or starting process of the entire system, thermal energy is generated from any type of heat source (not shown in Figure 1).

A continuous process for drying, for combustion, and for converting thermal energy into electric energy Ee is carried out by means of the system proposed by the present invention. The presence of the boiler 3, connected to the heat exchanger 6 and to the drying chamber 2 further allows a good use of the heat and allows ensuring a continuous closed energy conversion cycle, finally increasing the efficiency and productivity of the entire system and reducing environmental pollution.

A person skilled in the art will be able to introduce variations and modifications in the embodiment shown and described without departing from the scope of the present invention as it is defined in the attached claims.

## Claims

1. A system for converting thermal energy into electrical energy, comprising:
- a steam boiler (3),
- a tank (1) of combustible matter to be supplied to said boiler (3),
- an electrical turbogenerator (5) with a turbine communicated with a steam outlet (14) of said boiler (3); and
- a heat exchanger (6) with at least one first inlet (E1) receiving exhaust steam from said electrical turbogenerator (5), and an outlet (9) connected to said steam boiler (3) to supply said exhaust steam once it is condensed to the boiler (3);
**characterized in that** it implements a continuous process for drying, for combustion, and for converting thermal energy into electric energy, and **in that** it comprises a dehydrating and drying system with at least one vacuum chamber (2) with:
- at least one heat exchanger (11) to heat said wet combustible matter (12) for the purpose of drying it up to a predetermined degree,
- an inlet (13) joined to said tank (1) for introducing said wet combustible matter (12) in said vacuum chamber (2) on said heat exchanger (11), which is at least one in number,
- a first outlet (4) connected to an inlet of the steam boiler (3) to supply it with said combustible matter once it is dry, and
- a second outlet (8) connected to a second inlet (E2) of said heat exchanger (6) to supply it with the steam leaving the vacuum chamber (2), resulting from the evaporation of the moisture of the wet combustible matter (12) upon drying, so that such heat exchanger condenses it and supplies it to the steam boiler (3) through said outlet (9) of the heat exchanger (6),
in which said heat exchanger (11) of the vacuum chamber, which is at least one in number, comprises an inlet connected to said exhaust steam outlet (10) of the electrical turbogenerator (5), and an outlet (7) connected to said first inlet (E1) of said heat exchanger (6) to supply it with said exhaust steam from the electrical turbogenerator (5) once it has circulated through the heat exchanger (11) of the vacuum chamber (2).

2. A system according to claim 1, **characterized in that** said heat exchanger (6) comprises a third inlet (E3) directly connected to said exhaust steam outlet (10) of the electrical turbogenerator (5), the heat exchanger (6) being adapted to supply the liquid product of the condensation of the steam entering through the inlets (E1, E2, E3) to the steam boiler (3) through said outlet (9).

3. A system according to any of the previous claims, **characterized in that** the steam entering through the inlets (E1, E2, E3) of the heat exchanger (6) is low-pressure steam, and **in that** the steam leaving through said steam outlet (14) of said boiler (3) is high-pressure steam.

4. A system according to claim 3, **characterized in that** said boiler (3) is adapted to produce said high-pressure steam at a temperature of hundreds of degrees centigrade.

5. A system according to claim 2, **characterized in that** said heat exchanger (6) comprises a cooling circuit with an inlet of cold water for cooling the entering steam until condensing it by means of heat transfer.

## Patentansprüche

1. System zur Umwandlung von Wärmeenergie in elektrische Energie, umfassend:
- einen Dampfkessel (3),
- einen Tank (1) mit dem genannten Kessel (3) zuzuführendem Brennstoff,
- einen elektrischen Turbogenerator (5) mit einer Turbine, die mit einem Dampfauslass (14) des genannten Kessels (3) in Verbindung steht; und
- einen Wärmetauscher (6) mit zumindest einem ersten Einlass (E1), der Abdampf von dem genannten elektrischen Turbogenerator (5) erhält, und einen Auslass (9), der mit dem genannten Dampfkessel (3) in Verbindung steht, um den genannten Abdampf zuzuführen, nachdem er zum Kessel (3) kondensiert ist;
**dadurch gekennzeichnet, dass** es einen durchgehenden Prozess zum Trocknen, zur Verbrennung, und zur Umwandlung von Wärmeenergie in elektrische Energie umsetzt, und dass es ein Entwässerungs- und Trocknungssystem mit zumindest einer Vakuumkammer (2) mit Folgendem umfasst:
- zumindest einem Wärmetauscher (11) zur Erwärmung des genannten feuchten Brennstoffs (12), um ihn bis zu einem vorbestimmten Grad zu trocknen,
- zumindest einen Einlass (13), der mit dem genannten Tank (1) verbunden ist, zur Einführung des genannten feuchten Brennstoffs (12) in die genannte Vakuumkammer (2) an dem genannten Wärmetauscher (11),
- einen ersten Auslass (4), der mit einem Einlass des Dampfkessels (3) in Verbindung steht, um ihm den genannten Brennstoff zuzuführen, nachdem dieser trocken ist, und
- einen zweiten Auslass (8), der mit einem zweiten Einlass (E2) des genannten Wärmetauschers (6) in Verbindung steht, um ihm den die Vakuumkammer (2) verlassenden Dampf zuzuführen, der aus dem Verdampfen der Feuchtigkeit des feuchten Brennstoffs (12) nach dem Trocknen resultiert, so dass der derartige Wärmetauscher ihn kondensieren lässt und ihn dem Dampfkessel (3) durch den genannten Auslass (9) des Wärmetauschers (6) zuführt,
in welchem der genannte zumindest eine Wärmetauscher (11) der Vakuumkammer einen Einlass umfasst, der mit dem genannten Abdampfauslass (10) des elektrischen Turbogenerators (5) in Verbindung steht, und einen Auslass (7), der mit dem genannten ersten Einlass (E1) des genannten Wärmetauschers (6) in Verbindung steht, um ihm den genannten Abdampf aus dem elektrischen Turbogenerator (5) zuzuführen, nachdem er durch den Wärmetauscher (11) der Vakuumkammer (2) zirkuliert ist.

2. System nach Anspruch 1, **dadurch gekennzeichnet, dass** der genannte Wärmetauscher (6) einen dritten Einlass (E3) umfasst, der direkt mit dem genannten Abgassauslass (10) des elektrischen Turbogenerators (5) in Verbindung steht, wobei der Wärmetauscher (6) dazu angepasst ist, das flüssige Produkt der Kondensation des Dampfes, der durch die Einlässe (E1, E2, E3) zum Dampfkessel (3) durch den genannten Auslass (9) eintritt, zuzuführen.

3. System nach einem der vorherigen Ansprüche, **dadurch gekennzeichnet, dass** der Dampf, der durch die Einlässe (E1, E2, E3) des Wärmetauschers (6) eintritt, Niederdruck-Dampf ist, und dass der Dampf, der durch den genannten Dampfauslass (14) des genannten Kessels (3) austritt, Hochdruck-Dampf ist.

4. System nach Anspruch 3, **dadurch gekennzeichnet, dass** der genannte Kessel (3) dazu angepasst ist, den genannten Hochdruck-Dampf bei einer Temperatur von mehreren hundert Grad Celsius zu erzeugen.

5. System nach Anspruch 2, **dadurch gekennzeichnet, dass** der genannte Wärmetauscher (6) einen Kühlkreislauf mit einem Einlass von kaltem Wasser zur Kühlung des eintretenden Dampfes umfasst, bis er diesen durch die Wärmeübertragung kondensiert lässt.

## Revendications

1. Un système pour convertir l'énergie thermique en énergie électrique, comportant :
- une chaudière à vapeur(3)
- un réservoir (1) de matière combustible pour alimenter cette chaudière (3),
- un turbogénérateur électrique (5) ayant une turbine reliée à une sortie de vapeur (14) de cette chaudière (3), et
- un échangeur thermique (6) ayant au moins une première entrée (E1) recevant la vapeur d'échappement de ce turbogénérateur électrique (5) et une sortie (9) reliée à cette chaudière à vapeur (3) pour alimenter avec cette vapeur d'échappement dès qu'elle est condensée à la chaudière (3);
**caractérisé en ce qu'**il accomplit un processus continu pour séchage, combustion et conversion de l'énergie thermique en énergie électrique et **en ce qu'**il comporte un système de déshydratation et de séchage avec au moins une enceinte à vide (2) ayant:
- au moins un échangeur thermique (11) pour chauffer cette matière combustible humide (12) afin de la sécher jusqu'à un certain point,
- une entrée (13) reliée à ce réservoir (1) pour introduire cette matière combustible humide (12) dans cette enceinte à vide (2) de cet échangeur thermique (11), qui est au moins une,
- une première sortie (4) reliée à une entrée de la chaudière à vapeur (3) pour alimenter avec cette matière combustible dès qu'elle est sèche, et
- une deuxième sortie (8) reliée à une deuxième entrée (E2) de cet échangeur thermique (6) pour l'alimenter avec la vapeur sortant de l'enceinte à vide (2) provenant de l'évaporation de l'humidité de la matière combustible humide (12) lors du séchage, de sorte que cet échangeur thermique la condense et l'alimente à la chaudière à vapeur (3) à travers cette sortie (9) de l'échangeur thermique (6),
où cet échangeur thermique (11) de l'enceinte à vide, qui est au moins une, comporte une entrée reliée à cette sortie de vapeur d'échappement (10) du turbogénérateur électrique (5) et une sortie (7) reliée à cette première entrée (E1) de cet échangeur thermique (6) pour l'alimenter avec cette vapeur d'échappement du turbogénérateur électrique (5) dès qu'elle a circulé à travers l'échangeur thermique (11) de l'enceinte à vide (2).

2. Un système conformément à la revendication 1, **caractérisé en ce que** cet échangeur thermique (6) comporté une troisième entrée (E3) directement reliée à cette sortie de vapeur d'échappement (10) du turbogénérateur électrique (5), l'échangeur thermique (6) étant adapté pour alimenter le produit liquide de la condensation de la vapeur entrant à travers les entrées (E1, E2, E3) à la chaudière à vapeur (3) à travers cette sortie (9).

3. Un système conformément à une quelconque de ces revendications précédentes, **caractérisé en ce que** la vapeur entrant à travers les entrées (E1, E2, E3) de l'échangeur thermique (6) est une vapeur à faible pression et **en ce que** la vapeur sortant à travers cette sortie de vapeur (14) de cette chaudière (3) est une vapeur à haute pression.

4. Un système conformément à la revendication 3, **caractérisé en ce que** cette chaudière (3) est adaptée pour produire cette vapeur à haute pression à une température de centaines de degrés centigrades.

5. Un système conformément à la revendication 2, **caractérisé en ce que** cet échangeur thermique (6) comporte un circuit de refroidissement ayant une entrée d'eau froide pour refroidir la vapeur qui entre jusqu'à la condenser au moyen d'un transfert de chaleur.
